Europäisches Patentamt

European Patent Office

Office européen des brevets

(19)

(11) **EP 0 597 532 B1**

(12) **EUROPEAN PATENT SPECIFICATION**

(45) Date of publication and mention
of the grant of the patent:
**08.07.1998 Bulletin 1998/28**

(51) Int Cl.6: **H04N 5/14**

(21) Application number: **93203099.2**

(22) Date of filing: **05.11.1993**

(54) **Video processing system**

Videoverarbeitungssystem

Système de traitement vidéo

(84) Designated Contracting States:
**AT BE CH DE ES FR GB IE IT LI LU NL SE**

(30) Priority: **11.11.1992 EP 92203451**

(43) Date of publication of application:
**18.05.1994 Bulletin 1994/20**

(73) Proprietor: **Philips Electronics N.V.**
**5621 BA Eindhoven (NL)**

(72) Inventors:
• **Misker, Jan Simon**
**NL-5656 AA Eindhoven (NL)**
• **Hamann, Theodora Louise**
**NL-5656 AA Eindhoven (NL)**
• **Rozendaal, Leendert Teunis**
**NL-5656 AA Eindhoven (NL)**

(74) Representative: **Steenbeek, Leonardus Johannes**
**INTERNATIONAAL OCTROOIBUREAU B.V.,**
**Prof. Holstlaan 6**
**5656 AA Eindhoven (NL)**

(56) References cited:
**EP-A- 0 430 049** **EP-A- 0 474 388**
**EP-A- 0 530 918** **EP-A- 0 549 174**
**US-A- 4 794 454**

## Description

The invention relates to a video processing system, more particularly to a system in which a motion-dependent choice is made between an inter-field processing mode which allows a better luminance-chrominance separation, and an intra-field processing mode which allows a better performance in the presence of motion.

Such a video processing system has been described in the non-prepublished European patent application no. 92.202.648.9 filed on 01-09-92 (PHN 13,822). In this system, a motion detector is used which derives motion information from the luminance signal.

US-A-4,794,454 discloses a movement detection circuit for detecting movement information of a luminance signal and movement information of a chrominance signal of a television signal. A first movement detection circuit detects the movement information of the luminance signal based on two signals spaced by one frame period, and a second movement detection circuit detects the movement information of the chrominance signal based on two signals spaced by two frame periods. Those two information signals are combined in an adder circuit to correctly detect the movement information of the image.

It is, *inter alia,* an object of the invention to provide a video processing system whose motion detector can very easily be manufactured and which yields better results. It is another object of the invention to provide a simple and reliable motion detector for detecting an amount of motion in chrominance signals. Therefore, a first aspect of the invention provides a method as defined in Claim 1. Another aspect of the invention provides a video processing apparatus as defined in Claim 6. Advantageous embodiments are defined in the subclaims.

The invention is based on the recognition that motion in saturated colored areas can be better detected on the basis of chrominance-related signals. Moreover, at least one linear combination of U and V chrominance-difference signals, and preferably a first linear combination of U and V chrominance-difference signals when the V chrominance-difference signal exceeds the U chrominance-difference signal, and a second linear combination of the U and V chrominance-difference signals in the opposite case, appears to be a very good approximation of the magnitude of the motion in the chrominance signals. While the results of even more complicated formulae can be obtained by means of a look-up table ROM, simple linear combinations can be implemented within a smaller chip area and/or by means of general purpose video processing circuitry without read-only memories.

These and other aspects of the invention will be apparent from and elucidated with reference to the embodiments described hereinafter.

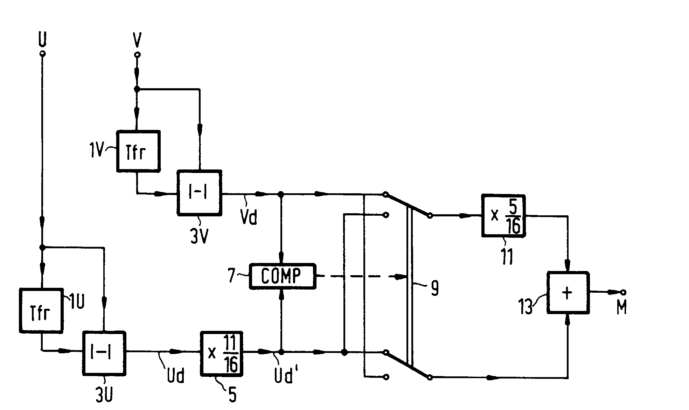

In the drawing, Fig. 1 shows an non-limitative example of an embodiment of a video processing apparatus in accordance with the present invention.

In Fig. 1, a U chrominance signal is delayed by a frame delay 1U whose input and output are applied to a subtracter 3U which takes the absolute value of the difference between its inputs. The output of the subtracter 3U is a chrominance-difference signal Ud which is applied to a multiplier 5 to obtain a chrominance-difference signal Ud' which equals 11/16 times Ud. Further, a V chrominance signal is delayed by a frame delay 1V whose input and output are applied to a subtracter 3V which takes the absolute value of the difference between its inputs. The output of the subtracter 3V is a chrominance-difference signal Vd. The signals Ud' and Vd are applied to a comparator 7 which controls a double changeover switch 9 whose switching contacts receive the signals Ud' and Vd. A first common contact of the double changeover switch 9 is applied to a multiplier 11 which multiplies by 5/16. An output of the multiplier 11 and a second common contact of the double changeover switch 9 are connected to an adder 13 which furnishes a signal M indicative of the amount of motion in the chrominance signals.

The signal M is thus calculated in accordance with the following formulae:

$$M = 5/16 \times Ud' + Vd \text{ when } Vd > Ud',$$

and

$$M = Ud' + 5/16 \times Vd \text{ in the opposite case,}$$

where

$$Ud' = \quad 11/16 \times Ud,$$
$$Ud = \quad U(t) - U(t-Tfr),$$
$$Vd = \quad V(t) - V(t-Tfr),$$
$$Tfr = \quad \text{frame period.}$$

When the signal M is used to make a motion-dependent choice between an intra-field processing mode and an inter-field processing mode, in which inter-field processing mode intra-frame averages of the U and V chrominance signals are transmitted, the above-described U and V chrominance signals are preferably replaced by their intra-frame averages. This yields the advantage that in the receiver, the detection of motion in the color signals is performed on the same signals as in the encoder, independent of the processing mode selected. In the encoder, the transmitted odd and even field U chrominance signals are

$$U_{odd}' = a.U_{ifa} + (1-a).U_{odd},$$

and

$$U_{even}' = a.U_{ifa} + (1-a).U_{even},$$

where

$U_{ifa} =$     $(U_{odd} + U_{even})/2,$
$U_{odd} =$     odd field U chrominance input signal,
$U_{even} =$     even field U chrominance input signal,
$a =$     motion-dependent factor.

In the decoder, the received even and odd field signals are averaged:

$$(U_{odd}' + U_{even}')/2 = a.U_{ifa} + (1-a).(U_{odd} + U_{even})/2$$

$$= a.U_{ifa} + (1-a).U_{ifa}$$

$$= U_{ifa},$$

which shows that, independent of the factor a, the intra-frame average chrominance signals are available in both the encoder and the decoder, so that in the decoder, it is possible to obtain the motion-adaptive processing mode switching signal on the basis of the same signals as those used in the encoder.

It should be noted that the above-mentioned embodiments illustrate rather than limit the invention, and that those skilled in the art will be able to design many alternative embodiments without departing from the scope of the appended claims. It will be evident that alternative formulae and alternative embodiments for calculating the formulae are conceivable. For example, Ud' = 3/4 x Ud does not lead to results which are much different from the results obtained with the above-mentioned formula, but is slightly simpler to implement (for 3/4 it holds that the numerator 3 equals 2 (one shift) plus 1, whereas for 11/16 it holds that the numerator 11 equals 8 (3 shifts) plus 2 (one shift) plus 1). Both factors 3/4 and 11/16 are approximations of 0.71 (11/16 being better than 3/4), which number 0.71 is a theoretically optimal attenuation factor for Ud to give Ud' and Vd a comparable significance. The multiplication of Ud for obtaining Ud' yields the advantages that subsequently a simple comparison of Ud' and Vd suffices to control the double change-over switch 9, and the formulae for M become symmetric. The symmetry in the formulae for M yields the advantage that only one fixed multiplier 11 (x5/16), one adder 13 and the double change-over switch 9 controlled by the comparator 7 are required to implement both formulae. Of course, it is alternatively possible to use more, for example, 3 linear combinations of U and V chrominance-related signals, but the complexity increases with an increasing number of linear combinations used to obtain the motion signal.

## Claims

1. A method of obtaining a motion signal (M) indicative of an amount of motion in chrominance signals (U, V), characterized by comprising the steps of:

    deriving (1U, 3U, 5) U chrominance-difference signals (Ud') from U chrominance signals and delayed U chrominance signals;
    deriving (1V, 3V) V chrominance-difference signals (Vd) from V chrominance signals and delayed V chrominance signals; and
    deriving (7-13) at least one linear combination of said U and V chrominance-difference signals (Ud', Vd) to obtain said motion signal (M).

2. A method as claimed in Claim 1, wherein said step of deriving (7-13) at least one linear combination of said U and V chrominance-difference signals (Ud', Vd) includes deriving a first linear combination of said U and V chrominance-difference signals (Ud', Vd) when said V chrominance-difference signal (Vd) exceeds said U chrominance-difference signal (Ud'), and deriving a second linear combination of said U and V chrominance-difference signals (Ud', Vd) in the opposite case, to obtain said motion signal (M).

3. A method as claimed in Claim 1, wherein said U chrominance-difference signal (Ud') is the absolute difference (3U) of a present U chrominance signal and a U chrominance signal from one frame period earlier, the difference having been multiplied (5) by a simple rational factor, preferably 11/16.

4. A method as claimed in Claim 2, wherein said first and second linear combinations are implemented by means of a single adder (13) and a single fixed multiplier (11) for multiplying by a simple rational factor, preferably 5/16.

5. A method as claimed in Claim 1, wherein said U and V chrominance signals (Ud', Vd) are intra-frame averaged chrominance signals.

6. A video processing apparatus having an intra-field processing mode and an inter-field processing mode, in which a motion-dependent choice is made between these modes, the apparatus being characterized by comprising:

    means (1U, 3U, 5) for deriving U chrominance-difference signals (Ud') from U chrominance signals and delayed U chrominance signals;
    means (1V, 3V) for deriving V chrominance-difference signals (Vd) from V chrominance signals and delayed V chrominance signals; and
    means (7-13) for deriving a first linear combination of said U and V chrominance-difference signals (Ud', Vd) when said V chrominance-difference signal (Vd) exceeds said U chrominance-difference signal (Ud'), and deriving a second linear combination of said U and V chrominance-difference signals (Ud', Vd) in the opposite case, to obtain a motion signal (M) for said motion-dependent choice.

**Patentansprüche**

1.  Verfahren zum Erhalten eines Bewegungssignals (M), das indikativ ist für Bewegung in Farbartsignalen (U, V), dadurch gekennzeichnet, daß dieses Verfahren die nachfolgenden Verfahrensschritte aufweist:

    .   das Herleiten (1U, 3U, 5) von U-Farbartdifferenzsignalen (Ud') aus U-Farbartsignalen und verzögerten U-Farbartsignalen;
    .   das Herleiten (1V, 3V) von Farbartdifferenzsignalen (Vd) aus V-Farbartsignalen und verzögerten V-Farbartsignalen; und
    .   das Herleiten (7-13) wenigstens einer linearen Kombination der genannten U- und V-Farbartdifferenzsignale (Ud', Vd) zum Erhalten des genannten Bewegungssignals (M).

2.  Verfahren nach Anspruch 1, wobei der genannte Verfahrensschritt der Herleitung (7-13) wenigstens einer linearen Kombination der genannten U- und V-Farbartdifferenzsignale (Ud', Vd) das Herleiten einer ersten linearen Kombination der genannten U- und V-Farbartdifferenzsignale (Ud', Vd) umfaßt, wenn das genannte V-Farbartdifferenzsignal (Vd) das genannte U-Farbartdifferenzsignal (Ud') übersteigt, und das Herleiten einer zweiten linearen Kombination der genannten U- und V-Farbartdifferenzsignale (Ud', Vd) im entgegengesetzten Fall, zum Erhalten des genannnten Bewegungssignals (M).

3.  Verfahren nach Anspruch 1, wobei das genannte U-Farbartdifferenzsignal (Ud') die absolute Differenz (3U) zwischen einem vorhandenen U-Farbartsignal und einem U-Farbartsignal aus einer einzigen Bildperiode früher ist, wobei die Differenz mit einem einfachen rationellen Faktor, vorzugsweise 11/16, multipliziert worden ist.

4.  Verfahren nach Anspruch 2, wobei die genannte erste und zweite lineare Kombination mittels eines einfachen Addieres (13) und eines einfachen festen Multiplizierers (11) zum Multiplizieren mit einem einfachen rationellen Faktor, verozugsweise 5/16 implementiert sind.

5.  Verfahren nach Anspruch 1, wobei das genannte U- und V-Farbartsignal (Ud', Vd) intrabildgemittelte Farbartsignale sind.

6.  Videoverarbeitungsanordnung mit einer Intrabildverarbeitungsmode und einer Interbildverarbeitungsmode, wobei ein bewegungsabhängige Wahl zwischen diesen Moden gemacht wird, wobei die Anordnung dadurch gekennzeichenet ist, daß sie die nachfolgenden Elemente aufweist:

    .   Mittel (1U, 3U, 5) zum Herleiten von U-Farbartdifferenzsignalen (Ud') aus U-Farbartsignalen und verzögerten U-Farbartsignalen;
    .   Mittel (1V, 3V) zum Herleiten von Farbartdifferenzsignalen (Vd) aus V-Farbartsignalen und verzögerten V-Farbartsignalen; und
    .   Mittel (7-13) zum Herleiten wenigstens einer linearen Kombination der genannten U- und V-Farbartdifferenzsignale (Ud', Vd), wenn das genannte V-Farbartdifferenzsignal (Vd) das genannte U-Farbartdifferenzsignal (Ud') übersteigt, und zum Herleiten einer zweiten linearen Kombination aus den genannten U- und V-Farbartdifferenzsignalen (Ud', Vd) in dem entgegengesetzten Fall, zum Erhalten eines Bewegungssignals (M) für die genannte bewegungsabhängige Wahl.

**Revendications**

1.  Procédé pour obtenir un signal de mouvement (M) indiquant une quantité de mouvement dans des signaux de chrominance (U, V), caractérisé par les étapes suivantes:

    dériver (1U, 3U, 5) des signaux de différence de chrominance U (Ud') à partir de signaux de chrominance U et de signaux de chrominance U retardés;
    dériver (1V, 3V) des signaux de différence de chrominance V (Vd) à partir de signaux de chrominance V et de signaux de chrominance V retardés, et
    dériver (7-13) au moins une combinaison linéaire desdits signaux de différence de chrominance U et V (Ud', Vd) afin d'obtenir ledit signal de mouvement (M).

2.  Procédé suivant la revendication 1, dans lequel ladite étape de dérivation (7-13) d'au moins une combinaison linéaire desdits signaux de différence de chrominance U et V (Ud', Vd) comprend la dérivation d'une première combinaison linéaire desdits signaux de différence de chrominance U et V (Ud', Vd) lorsque ledit signal de différence de chrominance V (Vd) dépasse ledit signal de différence de chrominance U (Ud'), et la dérivation d'une deuxième combinaison linéaire desdits signaux de différence de chrominance U et V (Ud', Vd) dans le cas contraire, afin d'obtenir ledit signal de mouvement (M).

3. Procédé suivant la revendication 1, dans lequel ledit signal de différence de chrominance U (Ud') est la différence absolue (3U) d'un signal de chrominance U présent et d'un signal de chrominance U provenant d'une période d'image précédente, la différence ayant été multipliée (5) par un facteur rationnel simple, de préférence 11/16.

4. Procédé suivant la revendication 2, dans lequel lesdites première et deuxième combinaisons linéaires sont appliquées au moyen d'un unique additionneur (13) et d'un unique multiplicateur fixe (11) pour multiplier par un facteur rationnel simple, de préférence 5/16.

5. Procédé suivant la revendication 1, dans lequel lesdits signaux de chrominance U et V (Ud', Vd) sont des signaux de chrominance moyens intratrames.

6. Dispositif de traitement vidéo présentant un mode de traitement intratrame et un mode de traitement intertrame, dans lequel un choix dépendant du mouvement est opéré entre ces modes, le dispositif étant caractérisé en ce qu'il comprend :

un dispositif (1U, 3U, 5) pour dériver des signaux de différence de chrominance U (Ud') à partir de signaux de chrominance U et de signaux de chrominance U retardés;
un dispositif (1V, 3V) pour dériver des signaux de différence de chrominance V (Vd) à partir de signaux de chrominance V et de signaux de chrominance V retardés, et
un dispositif (7-13) pour dériver une première combinaison linéaire desdits signaux de différence de chrominance U et V (Ud', Vd) lorsque ledit signal de différence de chrominance V (Vd) dépasse ledit signal de différence de chrominance U (Ud'), et dériver une deuxième combinaison linéaire desdits signaux de différence de chrominance U et V (Ud', Vd) dans le cas contraire, afin d'obtenir un signal de mouvement (M) pour ledit choix dépendant du mouvement.